Europäisches Patentamt

(19) European Patent Office

Office européen des brevets

(11) Veröffentlichungsnummer: **0 183 0**

**B1**

(12) # EUROPÄISCHE PATENTSCHRIFT

(45) Veröffentlichungstag der Patentschrifft:
07.02.90

(21) Anmeldenummer: 85113495.7

(22) Anmeldetag: 24.10.85

(51) Int. Cl. $^5$: **H 01 M 4/02**, H 01 : 66

(54) **Galvanisches Element mit einer Polymerelektrode.**

(30) Priorität: 29.11.84 DE 3443455
28.05.85 DE 3519090

(43) Veröffentlichungstag der Anmeldung:
04.06.86 Patentblatt 86/23

(45) Bekanntmachung des Hinweises auf die Patenterteilung:
07.02.90 Patentblatt 90/06

(84) Bennante Vertragsstaaten:
BE DE FR GB NL

(86) Entgegenhaltungen:
DE-A-3 326 193
FR-A-1 591 366
GB-A-2 013 022
GB-A-2 134 125
US-A-4 110 516

JOURNAL OF THE ELECTROCHEMICAL SOCIETY, vol. 129, no. 8, August 1982, Seiten 1685-1689, Manchester, New Hampshire, US; J. PREJZA et al.: "Electropolymerization of pyrrole in the presence of fluoborate"

CHEMICAL ABSTRACTS, Band 84, Nr. 13, 28. Juni 1976, Seite 130, Nr. 182423e, Columbus, Ohio, US; & JP-A-75 91 719 (MATSUSHITA ELECTRIC INDUSTRIAL CO. LTD.) 22.07.1975

(73) Patentinhaber: VARTA Batterie Aktienges ft
Am Leineufer 51
D-3000 Hannover 21 (DE)

(72) Erfinder: Bittihn, Rainer, Dipl.-Phys.
Königsberger Strasse 34
D-6233 Kelkheim (DE)
Erfinder: Woeffler, Friedrich
Am Nesselberg 2
D-6384 Schmitten (DE)
Erfinder: Ely, Georg
Im Weiherfeld 3
D-6246 Glashütten (DE)

(74) Vertreter: Kaiser, Dieter Ralf, Dipl.-Ing.
Gundelhardtstrasse 72
D-6233 Kelkheim/Ts. (DE)

**Beschreibung**

Die Erfindung betrifft ein galvanisches Element mit mindestens einer Elektrode, deren aktives Material aus einer mit Kationen oder Anionen dotierbaren, leitfähigen organischen Polymerverbindung von polykonjugierter Struktur besteht und die einen Aluminiumableiter besitzt.

Bei der Synthese von elektrizitätsleitenden organischen Polymeren aus den entsprechenden Monomeren fallen die Endprodukte je nach den Entstehungsbedingungen als mehr oder weniger tief gefärbte Kristallpulver oder auch als Folien an, welche die Wand des Reaktionsgefäßes filmartig bedecken. Sie werden darauf von dem flüssigen Reaktionsmedium, im allgemeinen der Suspension eines Ziegler-Natta-Katalysators in einem organischen Lösungsmittel, abgetrennt und können nach Reinigung in einfacher Weise verformt und verarbeitet werden.

Für die Verwendung als Elektrodenmaterial in Polymerzellen ist es bisher üblich, beispielsweise eine $(CH)_x$-Folie trotz guter elektronischer Eigenleitfähigkeit mit einem Metalldraht, z. B. einem Pt-Draht, als Stromabnehmer zu versehen und auf diese Weise die Leistungsfähigkeit der Elektrode zu verbessern. Da die Verbindung mit dem Metallableiter nur durch mechanischen Druck erfolgt, muß diese Stromabführung, auch bei flächig ausgebildeten Ableitermaterialien, wegen des unvermeidbaren Kontaktwiderstandes, der das Potential der belasteten Elektrode herabsetzt, unbefriedigend bleiben.

Aus diesem Grunde hat man neuerdings Maßnahmen ergriffen, die eine chemische oder physikalisch-chemische Anbindung des Polymermaterials an den metallischen Ableiter mit dem Vorteil eines geringen Übergangswiderstandes zum Ziele haben.

Solche Maßnahmen bestehen z. B. darin, einem schichtförmigen Polymergebilde metallische Ableiterbahnen aufzudampfen, aufzusputtern oder auch mit Hilfe fotografischer Techniken auf der Polymer-Oberfläche eine Leitschicht zu erzeugen. Hierbei muß jedoch berücksichtigt werden, daß die Volumenschübe des Polymers während eines Lade-Entladezyklus die aufgedampfte oder aufgedruckte Ableiterschicht zum Zerreissen bringen können.

Viele leitfähige Polymere entstehen aus den Monomeren durch Oxidation, bei welcher primär Radikalionen gebildet werden, die sich dimerisieren und die unter Anlagerung weiterer Monomerer Ober oligomere Zwischenglieder zur Polymerkette oxidiert werden.

Aus der DE-OS-3 326 193 ist es bekannt, eine solche Synthese des Polymers unmittelbar auf einem porösen Metallkörper als Substrat für die Abscheidung und für das Weiterwachsen des Polymers vorzunehmen. Der Metallkörper wird damit zugleich Trägergerüst und Ableiter für das organische, durch die nachfolgende Dotierung in den aktiven Zustand versetzte Elektrodenmaterial. Mit Rücksicht darauf, daß manche Polymere sich durch ein sehr hohes Oxidationspotential auszeichnen, werden für das Trägergerüst verhältnismäßig korrosionsbeständige Metalle wie Nickel, Nickel-Chrom, Kupfer, Kupfer-Nickel, Silber oder Platin verwendet.

Umgekehrt wurde gemäß JP-OS-5 912 576 (=DE-OS-3 324 968) ein blattförmiges Polyacetylenmaterial beidseitig mit Aluminium vakuumbedampft und das metallbeschichtete Polymer anschließend einer Rückstoß-Ionenimplantation unterworfen, bei der Aluminiumatome aufgrund hoher kinetischer Energie in das leitfähige Polymer eindringen und eine diffuse Übergangsschicht zwischen diesem und der Metallauflage erzeugen, so daß sich ein fester Verbund mit geringem Übergangswiderstand ergibt.

Da nun bereits die volumenbezogene theoretische Energiedichte von Polymersystemen relativ gering ist und dieser Nachteil die praktischen Polymerzellen noch viel empfindlicher belastet, weil nämlich die meisten bekannten Elektrodenträger im Vergleich zu der darauf aufgebrachten Polymerschicht von nur wenigen µm Stärke ein unverhältnismäßig großes Totvolumen darstellen, liegen die volumenspezifischen Energiedichten praktischer Polymerelektroden besonders weit unter dem theoretischen Wert.

Aufgabe der Erfindung ist es daher, von der direkten Synthetisierbarkeit polymerer Schichten auf metallischen Oberflächen ausgehend ein Substrat anzugeben, welches als Abscheidungsunterlage bei diesem anodischen Prozeß ebenso brauchbar ist wie die bekannten Metallkörper, wobei als Basis für das Substrat wegen seines vorteilhaften geringen spezifischen Gewichts ein Aluminiumableiter beibehalten werden soll, so daß zumindest die Funktion des Ableiters und Elektrodenträgers durch ein weniger aufwendiges und billiges Material im Vergleich zu Edelmetallen ausgeübt wird.

Die Aufgabe wird erfindungsgemäß mit den im kennzeichnenden Teil entweder des Anspruchs 1 oder des Anspruchs 2 angegebenen Maßnahmen gelöst.

Zur Überwindung des vorliegenden Problems bieten sich demnach zwei alternative Lösungen an deren Erfolg in bezug auf die gewünschte Elektrodenqualität jedoch der gleiche ist.

Ein beiden erfindungsgemäßen Lösungen gemeinsamer Vorteil liegt zunächst einmal darin, daß in dem vorgesehenen Aluminium-Ableiter ein Werkstoff mit einer sehr hohen gewichts- und volumenspezifischen Leitfähigkeit zum Tragen kommt, der es, zumindest bei Verwendung in Form dünner Folien, erlaubt, das Volumenverhältnis Polymerfilm: Ableitermaterial deutlich größer als 1 werden zu lassen, wenn die Folienstärke nur einige um beträgt und damit die gleiche Größenordnung der Polymerfilme erreicht. Unter diesen Umstäden läßt sich die Energiedichte der Polymerbatterie in annehmbaren Grenzen halten.

Nun sind Aluminiumfolien der gewünschten Qualität, wie sie vom Hersteller bezogen werden, zwar mechanisch hinreichend stabil, andererseits aber mit einer stromisolierenden natürlichen Oxidhaut behaftet, welche für sich allein verhin-

3

dert, daß die Folie im Lieferungszustand überhaupt als Substrat für die anodische Polymerisation von organischen Substanzen eingesetzt werden kann. Dabei zeichnet sich eine oxidierte Aluminiumfläche wiederum durch enorme Beständigkeit aus und schützt das Grundmetall gegen weitere Oxidation.

Überraschenderweise hat es sich nun gezeigt, daß durch Beschichtung einer in diesem Oberflächenzustand belassenen Aluminiumunterlage mit einem elektronenleitenden Material diese die Befähigung erlangt, einerseits die Rolle des Abscheidungssubstrats beim Polymerisationsprozeß zu übernehmen und andererseits auch beim späteren Batteriebetrieb die Funktion des Elektrodenträgers und -ableiters uneingeschränkt zu erfüllen, ohne korrosionsanfällig zu sein.

Als elektronenleitendes Material für den Überzug eignen sich zahlreiche Metalle, vorzugsweise jedoch solche aus der Reihe der Edelmetalle, insbesondere Gold oder Platin, ferner auch Nickel, Chrom oder eine Chrom-Nickel-Legierung. Die Aufbringung auf die Aluminiumunterlage kann durch Aufdampfen oder Aufsputtern erfolgen. Eine weitere geeignete Methode ist das Aufsprühen oder Auflackieren einer Suspension, die man aus Metallstäuben und einem Lösungsmittel unter Zuhilfenahme geeigneter Stabilisatoren hergestellt hat.

Besonders vorteilhaft ist ein Überzug aus Kohlenstoff. Er wird als Graphit oder Ruß eingesetzt und läßt sich entweder aufdampfen oder vorzugsweise wie die Metalle in suspendierter Form aufsprühen bzw. auflackieren. Eine ähnliche Technik wird übrigens bei den Leitfähigkeitslacken angewandt.

Nach dieser Vorbehandlung ist die direkte elektrochemische Aufpolymerisation des aktiven organischen Elektrodenmaterials aus einer Lösung des Monomeren in einem indifferenten organischen Lösungsmittel heraus einwandfrei durchführbar.

Die Haftfestigkeit der Polymerschicht läßt sich noch steigern und die Leitfähigkeit der Oxidschicht auf dem Aluminium erhöhen, wenn die nach einer der weiter oben genannten Methoden aufgebrachten Edel- bzw. Schwermetallüberzüge vor der Polymerbeschichtung einer mehrstündigen Temperung bei 200 - 300°C unterzogen werden.

Die alternative Elektrodenausführung gemäß der Erfindung besteht darin, daß die Aluminiumunterlage durch eine Beizbehandlung mit Kali- oder Natronlauge vor ihrem Oxidbelog befreit und die blank gebeizte Aluminiumoberfläche zuerst mit einem korrosionsstabilen Schwermetall beschichtet wird und erst auf dieser Grundlage die Abscheidung des Polymers erfolgt. Der Korrosionsschutz für das Aluminium muß dabei nicht ausschließen, daß sich ggfls. oxidische Anlaufschichten auf dem Schwermetallüberzug bilden, sofern diese selbst genügend elektronenleitend sind.

Ein besonders vorteilhaftes Schwermetall für den erfindungsgemäßen Zweck ist Chrom,

4

ebenso eine Chrom-Nickel-Legierung. vorteilhafter, aber durch ihren Prei schränkt, bieten sich Edelmetalle, insb Platin, an.

Die im Rahmen der Erfindung vorz für die Polymerbildung infrage kommen nischen Verbindungen sind Pyrrol, 1 Furan, Anilin und p-Phenylensulfid

Überraschenderweise werden mit c dungsgemäßen Maßnahme gerade auch oxidbehafteten und auf natürliche Wei sionsgeschützten Aluminiumsubstrat elektrolytseitigen Fläche der Oxidschic gungen geschaffen, die einen elektrochⲉ Prozeß erst ermöglichen. Da die Oxidsc insbesondere der darauf ausgebreitete ᴵ außerordentlich dünn sind, wird als Erklᴇ zunehmen sein, daß der für die anodisc merisation notwendige Elektronenfluᴉ einen Tunneleffekt zwischen der aufgᴇ Metallschicht und der metallischen "Al seele" über die Oxidschicht hinweg z kommt.

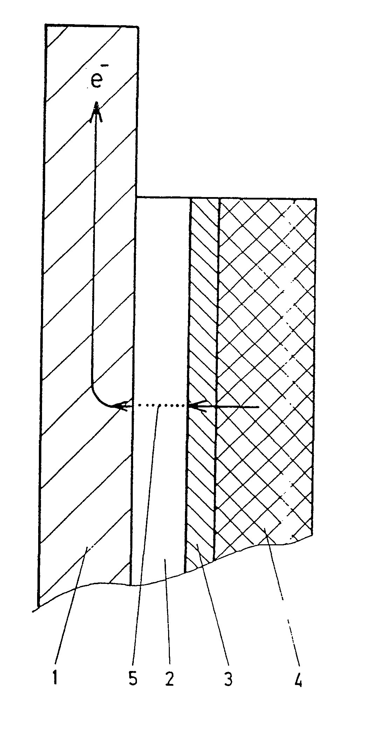

Die Figur macht diesen vermuteten halt besonders anschaulich. Sie zeigt tisch eine erfindungsgemäße Polymerelᴇ der Ausführung gemäß Anspruch 1. Kᴇ nend für diese ist die Schichtenfolge Alⲓ Metall 1, natürliche Oxidbedeckung 2, elᴇ leitender Überzug 3 (Edelmetall oder Ko und elektrochemisch abgeschiedenes Pᴏ Nach Erreichen eines bestimmten Poteᴦ les zwischen den Schichten 1 und 3 könᴦ tronen die nichtleitende Oxidbedeckung die sie sich eine Tunnelstrecke 5 bahn⸱ winden und über den Aluminiumableiter sen.

Aus Gründen einer besseren Haftunⲅ lymers auf dem Substrat ist es vorteilhaff von Folien erfindungsgemäß präparierte oder Al-Streckmetall einzusetzen. In die umschließt der Polymerfilm die Stege dᴇ oder des Streckmetalls formschlüssig ᴜ nicht mehr vom Träger abgelöst werden.

Bei dieser Verbundweise von Ableᴉ Elektrodenmaterial verbleiben zwᴇ Maschen-Leerräume, die jedoch mit Vorteil als Elektrolytreservoir genutzt können, da die Polymerelektrode zur ᴀ jeweils einer bestimmten Elektrolytmenⲅ die ihr bei Verteilung auf die Maschen in barer Nähe zur Verfügung gehalten werc In diesem Sinne ist es zweckmäßig, schenräume bereits bei der Herstellunⲅ Netzes oder Al-Streckmetalls so zu dim ren, daß die für den Betrieb der Elektrᴏ derliche stöchiometrische Elektro gerade in diese Hohlräume paßt. Eine pierte Elektrode trägt wesentlich zur ᴘ der Leistungsdichte einer Polymerzelle b zumindest einen Teil des Elektrolyten ᴇ Komponente integriert, für deren Unteᴉ sonst nur der poröse Separator zur ᴠ stehen würde. Dieser kann als inaktiver teil dadurch auf eine geringere Dicke ᴜ

entsprechend verringerten Widerstand gebracht werden.

Die Herstellung der alternativen Polymerelektrode nach Anspruch 2 der Erfindung geht vom Aluminiumableiter aus, welcher als Blechfolie, günstiger jedoch in Form eines Netzes oder Streckmetalls, vorliegt. Im Anlieferungszustand ist das Grundmetall durch seine natürliche Oxidhaut geschützt, die auch als Nichtleiter verhindert, daß das Aluminium unmittelbar bzw. ohne Vorbehandlung als leitfähiger Träger für ein elektrochemisch aktives Material eingesetzt werden kann.

Erfindungsgemäß besteht die Vorbehandlung in der gründlichen Entfernung der natürlichen Oxidschicht durch Beizen. Als Beizflüssigkeit dient Kali- oder Natronlauge. Nach gründlicher Wasserspülung erfolgt dann vor dem Aufpolymerisieren, ohne den Aluminiumableiter antrocknen zu lassen, zunächst die Aufbringung der Schwermetallschicht auf galvanischem Wege.

Der so vorbehandelte und z. B. mit Chrom porenfrei plattierte Ableiter ist nunmehr befähigt, mit dem aktiven Polymer einen festen Verbund herzustellen. Ebenso einwandfrei ist die direkte elektrochemische Aufpolymerisation des Elektrodenmaterials aus einer Lösung des Monomeren in einem Lösungsmittel, das vorzugsweise identisch mit demjenigen des Zellelektrolyten ist, mittels des erfindungsgemäß präparierten Ableiters als Abscheidungsunterlage durchführbar.

Polymerelektroden mit erfindungsgemäßer Schwermetall-Plattierung des Aluminiumträgers zeichnen sich noch durch den besonderen Vorteil aus, daß sie gegenüber Feuchtigkeitsspuren im organischen Elektrolyten, die sich nur mit erheblichem Kostenaufwand in tolerierbaren Grenzen halten lassen, unempfindlich sind.

**Patentansprüche**

1. Galvanisches Element mit mindestens einer Elektrode, deren aktives Material aus einer mit Kationen oder Anionen dotierbaren, leitfähigen organischen Polymerverbindung von polykonjugierter Struktur besteht und die einen Aluminiumableiter besitzt, dadurch gekennzeichnet, daß die Polymerverbindung aus dem jeweils zugrundeliegenden Monomeren durch elektrochemische Abscheidung an einer mit ihrer natürlichen Oxidhaut belassenen, jedoch mit einem elektronenleitenden Überzug versehenen Aluminiumunterlage gebildet ist.

2. Galvanisches Element mit mindestens einer Elektrode, deren aktives Material aus einer mit Kationen oder Anionen dotierbaren, leitfähigen organischen Polymerverbindung von polykonjugierter Struktur besteht und die einen Aluminiumableiter besitzt, dadurch gekennzeichnet, daß die Polymerverbindung aus dem jeweils zugrundeliegenden Monomeren durch elektrochemische Abscheidung an einer mittels Beizung von ihrer natürlichen Oxidhaut befreiten und mit einem korrosionsstabilen Schwermetall beschichteten Aluminiumunterlage gebildet ist.

3. Galvanisches Element nach Anspruch 1, dadurch gekennzeichnet, daß der elektronenleitende Überzug aus einem Metall, vorzugsweise aus Au, Pt, Ni, Cr oder einer Cr-Ni-Legierung besteht, welches auf die oxidbehaftete Aluminiumunterlage aufgedampft, aufgesputtert oder aus einer mit Hilfe eines Lösungsmittels hergestellten Suspension aufgesprüht oder auflackiert ist.

4. Galvanisches Element nach Anspruch 1, dadurch gekennzeichnet, daß der elektronenleitende Überzug Kohlenstoff in Form von Graphit oder Ruß ist, welcher auf die oxidbehaftete Aluminiumunterlage aufgedampf oder aus einer mit Hilfe eines Lösungsmittels hergestellten Suspension aufgesprüht oder auflackiert ist.

5. Galvanisches Element nach Anspruch 2, dadurch gekennzeichnet, daß das korrosionsstabile Schwermetall Chrom, eine Chrom-Nickel-Legierung oder ein Edelmetall ist.

6. Galvanisches Element nach einem der Ansprüche 1 bis 5, dadurch gekennzeichnet, daß die Aluminiumunterlage ein Folienmaterial, ein Aluminiumnetz oder ein Aluminiumstreckmetall ist.

7. Galvanisches Element nach Anspruch 6, dadurch gekennzeichnet, daß der Maschenhohlraum des Netzes oder Streckmetalls hinsichtlich seiner Dimensionierung auf das Volumen der zum Laden der Polymerelektrode erforderlichen Elektrolytmenge abgestimmt ist.

8. Galvanisches Element nach einem der Ansprüche 1 bis 7, dadurch gekennzeichnet, daß das der elektrodenaktiven Polymerverbindung zugrundeliegende Monomere aus der Reihe Pyrrol, Thiophen, Furan, Anilin, p-Phenylensulfid ausgewählt ist.

9. Verfahren zur Herstellung eines galvanischen Elements mit mindestens einer Elektrode, deren aktives Material aus einer mit Kationen oder Anionen dotierbaren, leitfähigen organischen Polymerverbindung von polykonjugierter Struktur besteht und die einen Aluminiumableiter besitzt, nach einem der Ansprüche 1, 3, 4 und 6 bis 8, dadurch gekennzeichnet, daß auf eine mit einer natürlichen Oxidhaut behaftete Aluminiumunterlage ein elektronenleitender Überzug aufgebracht wird und daß die organische Polymerverbindung aus dem jeweils zugrundeliegenden Monomeren an dem Überzug elektrochemisch abgeschieden wird.

10. Verfahren zur Herstellung eines galvanischen Elements mit mindestens einer Elektrode, deren aktives Material aus einer mit Kationen oder Anionen dotierbaren, leitfähigen organischen Polymerverbindung von polykonjugierter Struktur besteht und die einen Aluminiumableiter besitzt, nach einem der Ansprüche 2 und 5 bis 8, dadurch gekennzeichnet, daß eine Aluminiumunterlage durch Beizen mittels Lauge von ihrer natürlichen Oxidhaut befreit und die Oxidhaut durch eine galvanische Beschichtung aus einem korrosionsstabilen Schwermetall ersetzt wird und daß eine organische Polymerverbindung aus dem jeweils zugrundeliegenden Monomeren an der Schwermetallauflage elektrochemisch abgeschieden wird.

**Claims**

1. Galvanic element having at least one electrode whereof the active material comprises a conductive organic polymer compound having a polyconjugate structure and being dopable with cations or anions, which electrode has an aluminium conductor, characterized in that the polymer compound is formed from the respective monomer on which it is based by electrochemical deposition on an aluminium support on which its natural oxide skin is left but which is provided with an electron-conducting coating.

2. Galvanic element having at least one electrode whereof the active material comprises a conductive organic polymer compound having a polyconjugate structure and being dopable with cations or anions, which electrode has an aluminium conductor, characterized in that the polymer compound is formed from the respective monomer on which it is based by electrochemical deposition on an aluminium support freed of its natural oxide skin by means of pickling and coated with a heavy metal which is stable against corrosion.

3. Galvanic element according to claim 1, characterized in that the electron-conducting coating comprises a metal, preferably Au, Pt, Ni, Cr or a Cr-Ni alloy, which metal is applied to the oxide-coated aluminium support by means of vacuum evaporation, sputtering on or spraying on from a suspension produced with the aid of a solvent or lacquering on.

4. Galvanic element according to claim 1, characterized in that the electron-conducting coating is carbon in the form of graphite or carbon black which is applied to the oxide-coated aluminium support by means of vacuum evaporation or is sprayed on from a suspension produced with the aid of a solvent or is lacquered on.

5. Galvanic element according to claim 2, characterized in that the heavy metal stable against corrosion is chromium, a chromium-nickel alloy or a noble metal.

6. Galvanic element according to one of claims 1 to 5, characterized in that the aluminium support is a foil material, an aluminium network o⸱ nium expanded metal.

7. Galvanic element according to claim ⸱ acterized in that the mesh cavity of the net⸱ expanded metal is matched as regard its sioning to the volume of the electrolyte ⸱ required for charging the polymer electrode

8. Galvanic element according to one of c to 7, characterized in that the monomer o⸱ the electrode-active polymer compound i⸱ is selected from the series comprising thiophen, furan, aniline and p-phenylenesu⸱

9. Process for producing a galvanic ⸱ having at least one electrode whereof the material comprises a conductive organic ⸱ compound having a polyconjugate structu⸱ being dopable with cations or anions, whic⸱ trode has an aluminium conductor, acco⸱ one of claims 1, 3, 4, and 6 to 8, characte that there is applied to an aluminium having a natural oxide skin an electron-c⸱ ting coating, and in that the organic polym⸱ pound from the respective monomer on w⸱ based is electrochemically deposited coating.

10. Process for producing a galvanic ⸱ having at least one electrode whereof thr⸱ material comprises a conductive organic ⸱ compound having a polyconjugate struct⸱ being dopable with cations or anions, whi⸱ trode has an aluminium conductor, acco⸱ one of claims 2 and 5 to 8, characterize⸱ an aluminium support is freed of its natur⸱ skin by pickling with an alkaline solution ⸱ oxide skin is replaced by a galvanic coati⸱ heavy metal which is stable against co⸱ and in that an organic polymer compour⸱ the respective monomer on which it is b⸱ electrochemically deposited on the heav⸱ support.

**Revendications**

1. Elément galvanique avec au moins ur⸱ trode dont le matériau actif est constitué⸱ composé organique polymère conduct⸱ structure polyconjuguée, susceptible d'êt⸱ par des cations ou des anions, et compo⸱ conducteur en aluminium, élément galvan⸱ ractérisé en ce que le composé polym⸱ formé, à partir du monomère de base cor⸱ dant, par dépôt électrochimique sur un su⸱ aluminium ayant gardé sa couche d'oxyc⸱ relle mais muni d'un revêtement cor⸱ d'électrons.

2. Elément galvanique avec au moins ur⸱ trode dont le matériau actif est constitué⸱ composé organique polymère conduct⸱ structure polyconjuguée, susceptible d'êt⸱

par des cations ou des anions et comportant un conducteur en aluminium, élément galvanique caractérisé en ce que le composé polymère est formé, à partir du monomère de base correspondant, par dépôt électrochimique sur un support en aluminium, débarrassé par décapage de sa couche d'oxyde naturelle et revêtu d'un métal lourd résistant à la corrosion.

3. Elément galvanique selon la revendication 1, caractérisé en ce que le revêtement conducteur d'électrons est constitué par un métal, de préférence par de l'or, du platine, du nickel, du chrome ou d'un alliage chrome-nickel, qui est vaporisé, ou projeté, ou bien à partir d'une suspension réalisée à l'aide d'un solvant pulvérisé ou déposé par vernissage sur le support en aluminium muni de son oxyde.

4. Elément galvanique selon la revendication 1, caractérisé en ce que le revêtement conducteur d'électrons est du carbone sous forme de graphite ou de suie, qui est vaporisé ou bien, à partir d'une suspension réalisée à l'aide d'un solvant, déposé par pulvérisation ou par vernissage sur le support en aluminium muni de son oxyde.

5. Elément galvanique selon la revendication 2, caractérisé en ce que le métal lourd résistant à la corrosion est du chrome, un alliage chromenickel, ou un métal noble.

6. Elément galvanique selon une des revendications 1 à 5, caractérisé en ce que le support en aluminium est un matériau en feuille, un treillis d'aluminium ou de l'aluminium déployé.

7. Elément galvanique selon la revendication 6, caractérisé en ce que l'espace' laissé vide par les mailles du treillis ou du métal déployé est adapté au volume de la quantité d'électrolyte nécessaire pour la charge de l'électrode polymère.

8. Elément galvanique selon une des revendications 1 à 7, caractérisé en ce que le monomère de base du composé polymère actif dans l'électrode est choisi dans la série pyrrol, thiophène, furane, aniline, sulfure de p-phénylène.

9. Procédé pour la fabrication d'un élément galvanique avec au moins une électrode dont le matériau actif est constitué par un composé organique polymère conducteur, de structure polyconjuguée, susceptible d'être dopé par des cations ou des anions, et comportant un conducteur en aluminium, selon une des revendications 1, 3, 4 et 6 à 8, procédé caractérisé en ce qu'un revêtement conducteur d'électrons est déposé sur un support en aluminium muni de sa couche d'oxyde naturelle, et que le composé organique polymère est déposé électrochimiquement sur ce revêtement à partir du monomère de base correspondant.

10. Procédé pour la fabrication d'un élément galvanique avec au moins une électrode dont le matériau actif est constitué par un composé organique polymère conducteur, de structure polyconjuguée, susceptible d'être dopé par des cations ou des anions, et comportant un conducteur en aluminium, selon une des revendications 2 et 5 à 8, caractérisé en ce qu'un support en aluminium est débarrassé de sa couche d'oxyde naturelle par décapage à la lessive, et cette couche d'oxyde est remplacée par un revêtement galvanique en un métal lourd résistant à la corrosion et un composé organique polymère est déposé électrochimiquement, à partir du monomère de base correspondant, sur le support en métal lourd.

e⁻

1    5   2    3    4